# EUROPEAN PATENT APPLICATION

(11) **EP 4 756 273 A1**
(43) Date of publication of application: **10.06.2026**
(21) Application number: 24217877.0
(22) Date of filing: 05.12.2024
(51) Int. Cl.: F16L 3/24

(54) **DATA CENTER CABLE TRUNKING FASTENER**

(71) Applicant: Hsu, Chi-Feng, Taipei City (TW)
(72) Inventor: Hsu, Chi-Feng, Taipei City (TW)
(74) Representative: Wittmann, Günther

(57) **Abstract**

A data center cable trunking fastener, which is used for fastening a first cable trunking or a second cable trunking on a C-shaped steel frame, comprises a double-head fastening member and a compression component. The double-head fastening member has a body, a first fastening portion, and a second fastening portion. The first fastening portion and the second fastening portion are formed on two sides of the body respectively. The first fastening portion is used for fastening the first cable trunking. The second fastening portion is used for fastening the second cable trunking. The compression component is used for fixing the double-head fastening member, which fastens the first cable trunking or the second cable trunking, to the C-shaped steel frame.

## Description

### TECHNICAL FIELD

The present invention relates to a data center cable trunking fastener, which is used for fastening a data center cable trunking on a C-shaped steel frame.

### BACKGROUND OF THE INVENTION

With the continuous development of science and technology, the popularized applications of information digitization, cloud, Internet and other technologies have led to explosive growth of electronic information. In a data center, in order to have the normal transmission of information, especially in the event of natural disasters such as earthquakes, the ability to ensure fault-free communication lines should be supported. Therefore, an optical fiber raceway (hereinafter referred to as the cable trunking) system used in the data center must have an earthquake-resistant function. In order to achieve the earthquake-resistant function, cable trunkings are erected on a plane composed of a plurality of C-shaped steel frames and provided with fastening structures. A fastener is used for fastening a cable trunking and locked in a C-shaped steel frame. In this way, the internal optical fiber will be prevented from being pulled or falling off because of shaking the cable trunking.

Conventional cable trunkings are basically divided into two types, the difference of which is that they have different fastening structures. One type is provided with hook-like structures at the bottom of two side surfaces of its cable trunking, and the other type is provided with a plurality of hook-like structures at the bottom surface of it cable trunking. Since the two types of cable trunkings have different hook structures for fastening, at least two different fasteners are required to fasten the two types of cable trunkings on the C-shaped steel frames. Therefore, consumers must choose and purchase corresponding fasteners on the basis of cable trunkings purchased.

As a result of non-universal fasteners, it must be very careful to purchase cable trunkings or fasteners. If cable trunkings and fasteners purchased do not match well, there will be a waste of cost.

### SUMMARY OF THE INVENTION

In view of the above problem, a data center cable trunking fastener of the present invention is designed to be able to fasten two different types of cable trunkings through a double-head fastening member and serve as a universal fastener.

The data center cable trunking fastener of the present invention, which is used for fastening a first cable trunking or a second cable trunking on a C-shaped steel frame, comprises a double-head fastening member and a compression component. The double-head fastening member is disposed on an opening of the C-shaped steel frame and has a body, a first fastening portion, a second fastening portion, and a compression hole; the first fastening portion and the second fastening portion are formed on two sides of the body respectively; the first fastening portion is used for fastening a first hook portion of the first cable trunking; the second fastening portion is used for fastening a second hook portion of the second cable trunking; the compression hole is formed in the body. The compression component has a locking piece and a compression piece; the locking piece has a threaded section; the compression piece has a locking hole and at least one compression end; the compression piece is disposed in the C-shaped steel frame; the locking piece passes through the compression hole and the opening between two stoppers of the C-shaped steel frame; when the locking piece is tightened in the locking hole with the threaded section screwed into the locking hole, the compression piece is compressed toward the double-head fastening member.

In a preferred embodiment, the double-head fastening member further has at least one first covering portion and at least one second covering portion formed on two opposite sides of the body; the first covering portion and the second covering portion are used for covering the outsides of the C-shaped steel frame respectively.

In a preferred embodiment, the first fastening portion and the second fastening portion are formed on two opposite sides of the body.

In a preferred embodiment, the end of the first fastening portion has a hook groove; the hook groove matches with the first hook portion of the first cable trunking.

In a preferred embodiment, the end of the second fastening portion matches with the second hook portion of the second cable trunking.

In a preferred embodiment, the second fastening portion has a first section, a second section, and a third section; the first section extends transversely toward the outside from the side of the body; the second section extends longitudinally and upward from the outer end of the first section; the third section extends transversely towards the body from the upper end of the second section.

In a preferred embodiment, the locking piece further has a head portion and a recessed portion; the head portion and the recessed portion are located at the two ends of the locking piece respectively; the threaded section is located between the head portion and the recessed portion; the recessed portion is used for being provided with a retaining ring.

In a preferred embodiment, a gasket is provided between the head portion and the body.

In the data center cable trunking fastener of the present invention, the first fastening portion of the double-head fastening member is used for fastening the first hook portion of the first cable trunking, and the second fastening portion thereof is used for fastening the second hook portion of the second cable trunking. Therefore, the double-head fastening member can be universally used for the first cable trunking and the second cable trunking. In terms of purchase, there is no need to specifically select dedicated fasteners for the first cable trunking or the second cable trunking. Also, there will be no waste of cost resulting from purchasing a wrong type of cable trunkings.

### BRIEF DESCRIPTION OF DRAWINGS

Fig. 1 is a three-dimensional exploded schematic diagram of a data center cable trunking fastener of the present invention.
Fig. 2 is a schematic cross-sectional view of the data center cable trunking fastener of the present invention.
Fig. 3 is a schematic plan view showing the data center cable trunking fastener of the present invention is used for fastening a first cable trunking.
Fig. 4 is a schematic plan view from another viewing angle showing the data center cable trunking fastener of the present invention is used for fastening the first cable trunking.
Fig. 5 is a schematic cross-sectional view showing a compression component of the data center cable trunking fastener of the present invention is being fixed to a C-shaped steel frame.
Fig. 6 is a schematic cross-sectional view showing the compression component of the data center cable trunking fastener of the present invention is already fixed to the C-shaped steel frame.
Fig. 7 is a schematic plan view showing the data center cable trunking fastener of the present invention is used for fastening a second cable trunking.

### DETAILED DESCRIPTION OF THE INVENTION

Other technical contents, features, and effects of the present invention will be clearly presented in the following detailed description of the preferred embodiments with reference to the drawings. The drawings are drawn in a concise and powerful manner, that is, some commonly used structures and parts will be drawn in a simple schematic manner or omitted in the drawings if it does not affect the interpretation of the patent technical features. Moreover, the dimensions of each structure and each part in the drawings will be drawn to a scale suitable for readers to see, not to an actual prototype scale.

Unless otherwise defined, all technical and scientific terms used herein have the same meaning as commonly understood by a person having ordinary skill in the art to which this invention belongs.

As used herein, without specifying a specific number, the articles "a", "an" and the term "any" refer grammatically to one or more than one (i.e. at least one) item . For example, "an element" means one element or more than one element.

As used herein, the terms "first", "second", etc. are only used for distinguishing described elements and should not be understood as indicating or implying relative importance, order of use, or order of arrangement.

As used herein, the terms "upper", "lower", "front", "back", "left", "right", "side", "top", and "bottom", which are used for describing component names or positional relationships, assist in comparing the positional relationship between various feature structures. The actual orientations of the feature structures will change with the placement angle or the user's location, and it cannot therefore limit the scope of the present invention.

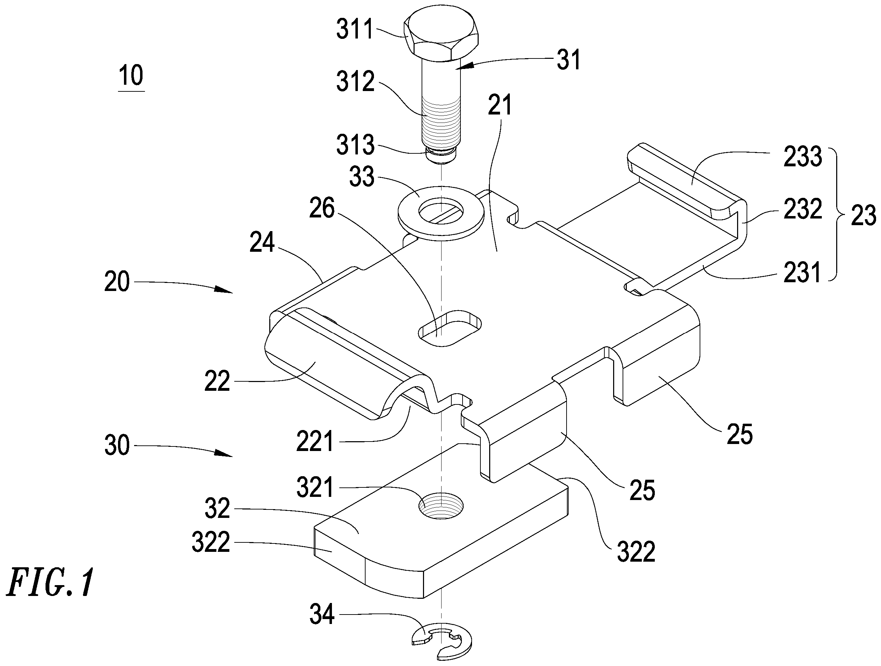

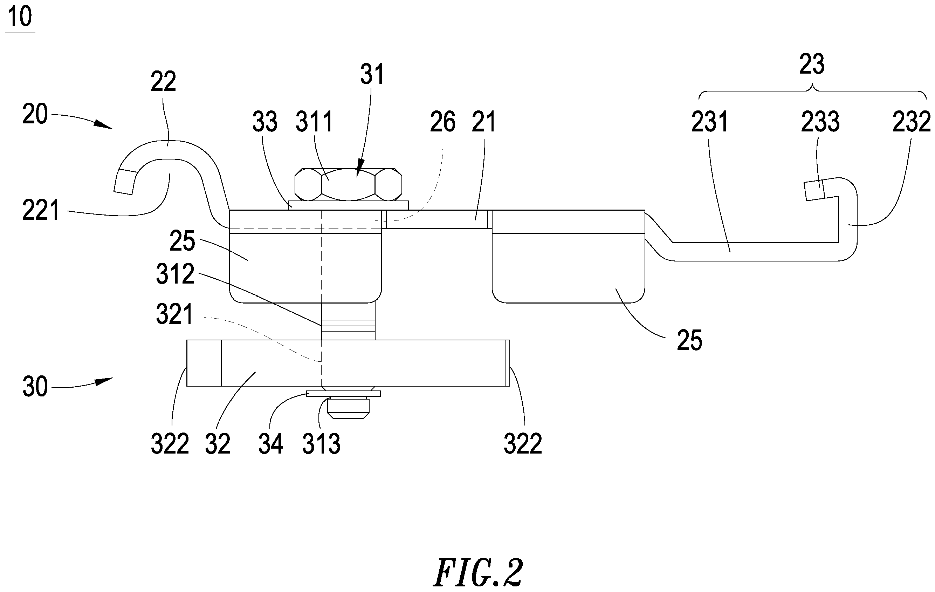

Please refer to Figs. 1 and 2, wherein Fig. 1 is a three-dimensional exploded schematic view of a data center cable trunking fastener 10 of the present invention, and Fig. 2 is a schematic plan view of the data center cable trunking fastener 10 of the present invention. As shown in the figures, the data center cable trunking fastener 10 includes a double-head fastening member 20 and a compression component 30.

The double-head fastening member 20 is formed in one piece and has a body 21, a first fastening portion 22, a second fastening portion 23, two first covering portions 24, two second covering portions 25, and a compression hole 26. The body 21 is a rectangular plate. The first fastening portion 22 is formed on one side of the body 21. The end of the first fastening portion 22 is hook-shaped with an opening facing downward. More specifically, the first fastening portion 22 has a hook groove 221, and the opening of the hook groove 221 faces downward. The second fastening portion 23 is formed on the opposite side of the body 21 with respect to the first fastening portion 22. The end of the second fastening portion 23 is barb-shaped with an opening facing the body 21. More specifically, the second fastening portion 23 has a first section 231, a second section 232, and a third section 233. The first section 231 extends transversely toward the outside from the side of the body 21, the second section 232 extends longitudinally and upward from the outer end of the first section 231, and the third section 233 extends transversely towards the body 21 from the upper end of the second section 232. The two first covering portions 24 are formed on one side of the body 21 and adjacent to the first fastening portion 22 and the second fastening portion 23 respectively, and the two second covering portions 25 are formed on another side of the body 21 and opposite to the first covering portions 24 respectively. The compression hole 26 is formed in the center of the body 21 or close to the center of the body 21.

The compression component 30 includes a locking piece 31, a compression piece 32, a gasket 33, and a retaining ring 34. The locking piece 31 has a head portion 311, a threaded section 312, and a recessed portion 313. The head portion 311 and the recessed portion 313 are located at the two ends of the locking piece 31 respectively. The threaded section 312 is located between the head portion 311 and the recessed portion 313. The gasket 33 is used for being disposed between the head portion 311 and the body 21. The compression piece 32 has a locking hole 321 and two compression ends 322. The locking piece 31 passes through the gasket 33 and the compression hole 26 in sequence with its end close to the recessed portion 313, and the threaded section 312 is screwed into the locking hole 321 so that the locking piece 31 can be combined with the double-head component 20 and tightened in the compression piece 32. The retaining ring 34 is disposed in the recessed portion 313.

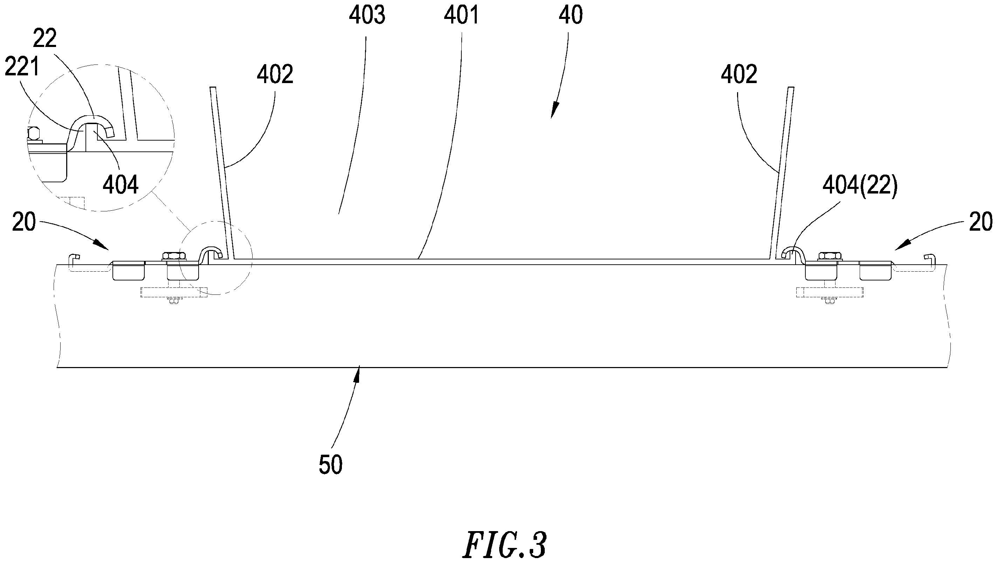

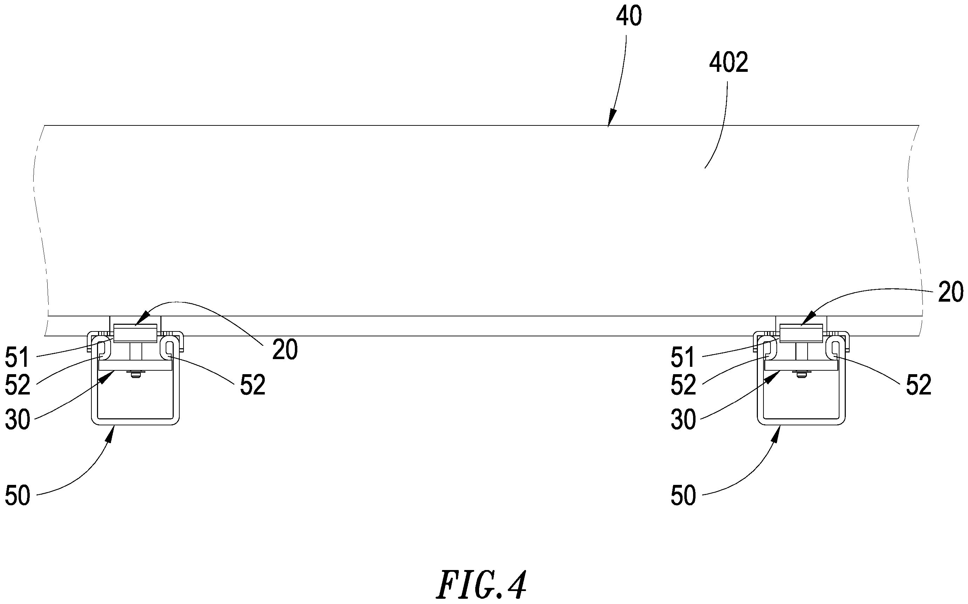

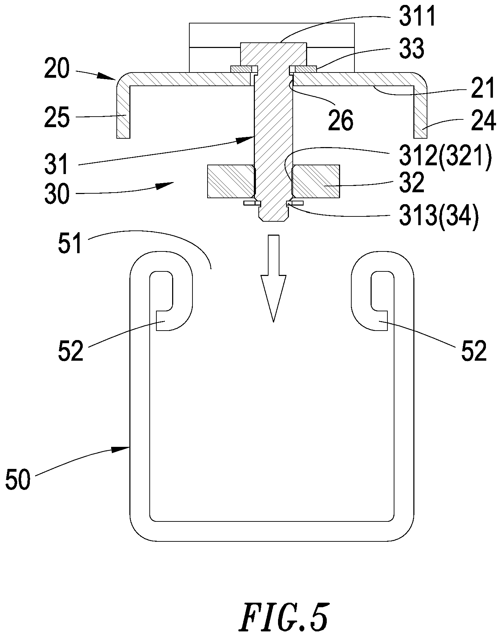

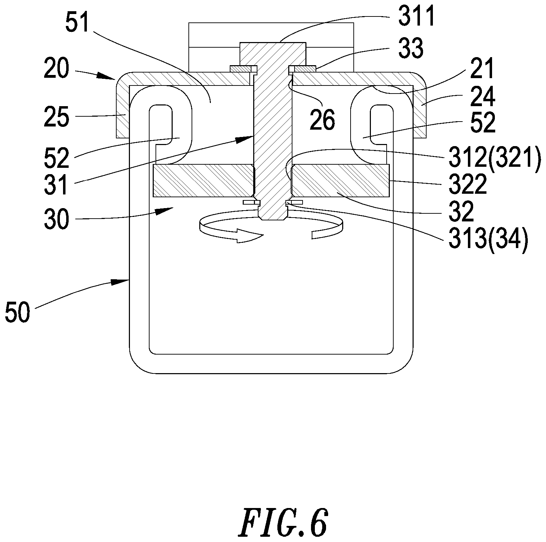

The first fastening portion 22 and the second fastening portion 23 are used for fastening two different types of cable trunkings respectively. One type of cable trunking is a first cable trunking 40. Please refer to Fig. 3, which is a schematic plan view showing the data center cable trunking fastener 10 of the present invention is used for fastening the first cable trunking 40. As shown in the figure, the first cable trunking 40 is a long trunking body with a U-shaped cross section. The U-shaped long trunking body has a trunking bottom surface 401 and two trunking side surfaces 402. The two trunking side surfaces 402 are formed vertically on the two sides of the trunking bottom surface 401 respectively. In this way, a space 403 is formed between the trunking bottom surface 401 and the two trunking side surfaces 402 for accommodating cables (not shown). Two first hook portions 404 are formed at the bottoms of the two trunking side surfaces 402, and the first hook portion 404 matches with the first fastening portion 22. Therefore, the two first hook portions 404 can be fastened to the hook grooves 221 of two double-head fastening members 20 respectively. Next, please refer to Fig. 4, which is a schematic plan view from another viewing angle showing the data center cable trunking fastener 10 of the present invention is used for fastening the first cable trunking 40. The data center cable trunking fastener 10 can be fixed on the C-shaped steel frame 50 through the compression component 30. The C-shaped steel frame 50 has an opening 51 facing upward and two stoppers 52 located on both sides of the opening 51. Please refer to Fig. 5, which is a schematic cross-sectional view showing the compression component 30 of the data center cable trunking fastener 10 of the present invention is being fixed to the C-shaped steel frame 50. The locking piece 31 passes through the opening 51 with its end close to the recessed portion 313. Please refer to Fig. 6, which is a schematic cross-sectional view showing the compression component 30 of the data center cable trunking fastener 10 of the present invention is already fixed to the C-shaped steel frame 50. When the threaded section 312 is tightly screwed into the locking hole 321, the compression piece 32 can be compressed toward the double-head fastening member 20, and the two stopper 52 is located between the compression ends 322 and the double-head fastening member 20. As a result, the friction force between the two stoppers 52 and the compression ends 322 is increased, and the friction force between the two stoppers 52 and the double-head fastening member 20 is also increased so the double-head fastening member 20 can be fixed to the C-shaped steel frame 50 through the compression component 30. In addition, the first covering portions 24 and the second covering portions 25 can cover the outsides of the two stoppers 52 respectively. Since the two first hook portions 404 can be fastened to the hook grooves 221 of the two double-head fastening members 20 respectively, the first cable trunking 40 fastened by the two double-head fastening members 20 can also be fixed on the C-shaped steel frame 50.

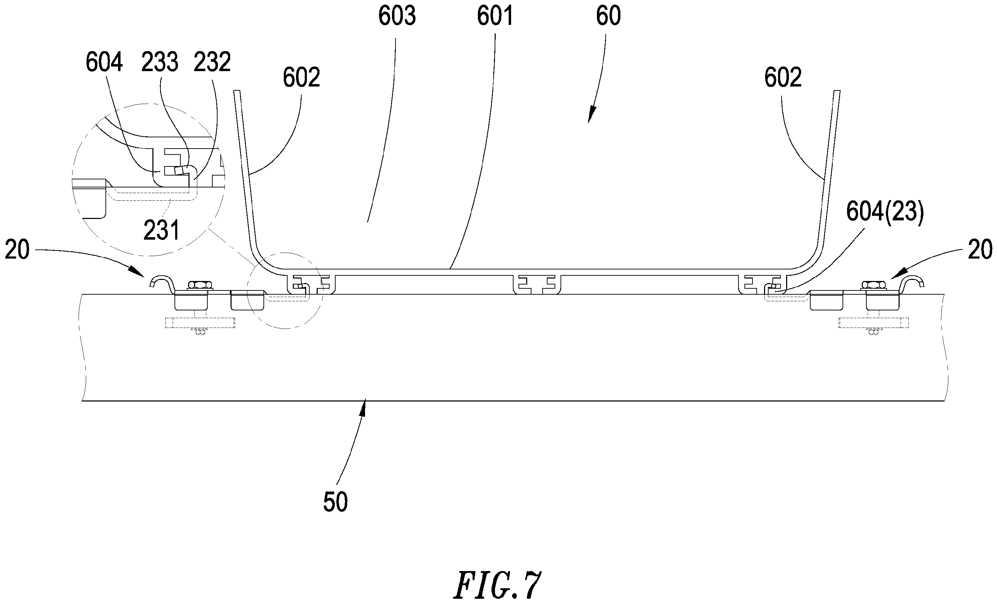

Moreover, another type of cable trunking is a second cable trunking 60. Please refer to Fig. 7, which is a schematic plan view showing the data center cable trunking fastener 10 of the present invention is used for fastening the second cable trunking 60. As shown in the figure, the second cable trunking 60 is a long trunking body with a U-shaped cross section. The U-shape long trunking body has a trunking bottom surface 601 and two trunking side surfaces 602. The two trunking side surfaces 602 are formed vertically on the two sides of the trunking bottom surface 601 respectively. In this way, a space 603 is formed between the trunking bottom surface 601 and the two trunking side surfaces 602 for accommodating cables (not shown). The second cable trunking 60 is different from the first cable trunking 40 in that at least two second hook portions 604 are formed beneath the trunking bottom surface 601, and the second hook portion 604 matches with the second fastening portion 23. Therefore, the two second hook portions 604 can be fastened to the second sections 232 and the third sections 233 of two double-head fastening members 20 respectively and then fixed on the C-shaped steel frame 50 through the compression components 30. The fixing way of the compression component 30 to the second cable trunking 60 is the same as that of the compression component 30 to the first cable trunking 40 so the details will not be described again. Since the two second hook portions 604 can be fastened to the second sections 232 and the third sections 233 of the two double-head fastening members 20 respectively, the second cable trunking 60 fastened by the two double-head fastening members 20 can also be fixed on the C-shaped steel frame 50.

In summary, in the data center cable trunking fastener provided by the present invention, the first fastening portion 22 of the double-head fastening member 20 is used for fastening the first hook portion 404 of the first cable trunking 40, and the second fastening portion 23 thereof is used for fastening the second hook portion 604 of the second cable trunking 60. Therefore, the double-head fastening member 20 can be universally used for the two types of cable trunkings: the first cable trunking 40 and the second cable trunking 60. In terms of purchase or use, there is no need to specifically select dedicated fasteners for the first cable trunking 40 or the second cable trunking 60. Also, there will be no waste of cost resulting from purchasing a wrong type of cable trunkings.

The above embodiments disclosed are only some preferred embodiments of the present invention and are not intended to limit the present invention. In the implementation of the present invention, the details disclosed in some embodiments are necessary for clarifying the disclosure of the specification. Those skilled in the art should understand that these details are not essential and should not limit the present invention. Anyone who is familiar with this technical field and has ordinary skill in the art will understand the foregoing technical features and embodiments of the present invention. Equivalent changes or modifications made without departing from the spirit and scope of the invention should still fall within the scope of the invention. The patent protection scope of the present invention should be subject to the claims attached to this specification.

## Claims

1. A data center cable trunking fastener (10), which is used for fastening a first cable trunking (40) or a second cable trunking (60) on a C-shaped steel frame (50), comprising:
a double-head fastening member (20), disposed on an opening (51) of the C-shaped steel frame (50) and having a body (21), a first fastening portion (22), a second fastening portion (23), and a compression hole (26); the first fastening portion (22) and the second fastening portion (23) formed on two sides of the body (21) respectively; the first fastening portion (22) used for fastening a first hook portion (404) of the first cable trunking (40); the second fastening portion (23) used for fastening a second hook portion (604) of the second cable trunking (60); the compression hole (26) formed in the body (21); and
a compression component (30), having a locking piece (31) and a compression piece (32); the locking piece (31) having a threaded section (312);the compression piece (32) having
a locking hole (321) and at least one compression end (322);the compression piece (32) disposed in the C-shaped steel frame (50);the locking piece (31) passing through the compression hole (26) and the opening (51) between two stoppers (52) of the C-shaped steel frame (50);when the locking piece (31) tightened in the locking hole (321) with the threaded section (312) screwed into the locking hole (321), the compression piece (32) compressed toward the double-head fastening member (20).

2. The data center cable trunking fastener (10) of claim 1, wherein the double-head fastening member (20) further has at least one first covering portion (24) and at least one second covering portion (25) formed on two opposite sides of the body (21); the first covering portion (24) and the second covering portion (25) are used for covering the outsides of the C-shaped steel frame (50) respectively.

3. The data center cable trunking fastener (10) of claim 1, wherein the first fastening portion (22) and the second fastening portion (23) are formed on two opposite sides of the body (21).

4. The data center cable trunking fastener (10) of claim 1, wherein the end of the first fastening portion (22) has a hook groove (221); the hook groove (221) matches with the first hook portion (404) of the first cable trunking (40).

5. The data center cable trunking fastener (10) of claim 1, wherein the end of the second fastening portion (23) matches with the second hook portion (604) of the second cable trunking (60).

6. The data center cable trunking fastener (10) of claim 5, wherein the second fastening portion (23) has a first section (231), a second section (232), and a third section (233); the first section (231) extends transversely toward the outside from the side of the body (21); the second section (232) extends longitudinally and upward from the outer end of the first section (231); the third section (233) extends transversely towards the body (21) from the upper end of the second section (232).

7. The data center cable trunking fastener (10) of claim 1, wherein the locking piece (31) further has a head portion (311) and a recessed portion (313); the head portion (311) and the recessed portion (313) are located at the two ends of the locking piece (31) respectively; the threaded section (312) is located between the head portion (311) and the recessed portion (313); the recessed portion (313) is used for being provided with a retaining ring (34).

8. The data center cable trunking fastener (10) of claim 7, wherein a gasket (33) is provided between the head portion (311) and the body (21).
